# EUROPEAN PATENT APPLICATION

(11) **EP 4 712 119 A1**
(43) Date of publication of application: **18.03.2026**
(21) Application number: 25200602.8
(22) Date of filing: 05.09.2025
(51) Int. Cl.: H01F 38/30, H01H 71/12, H02B 13/035

(54) **CURRENT TRANSFORMER AND SWITCHGEAR COMPRISING SAME**

(30) Priority: 13.09.2024 CN 202411287536
(71) Applicant: ABB SCHWEIZ AG, 5400 Baden (CH)
(72) Inventor: LIU, Jian, Xiamen, Fujian, 361100 (CN); LIN, JiLing, Xiamen, Fujian, 361101 (CN); ZHOU, Yao, Xiamen, Fujian, 361001 (CN); ZENG, QingPeng, Guangzhou, Guangdong, 510000 (CN); YANG, DongFeng, Xiamen, Fujian, 361100 (CN); FU, XiangQiang, Xiamen, Fujian, 361100 (CN); CHEN, YanYun, Xiamen, Fujian, 361001 (CN); ZHAN, CaoYing, Xiamen, Fujian, 361000 (CN); QIU, XueDong, Xiamen, Fujian, 361101 (CN)
(74) Representative: Zimmermann & Partner Patentanwälte mbB

(57) **Abstract**

The present invention relates to a current transformer and a switchgear comprising the same, the current transformer comprising a current transformer body (1) that is formed by casting; a current transforming assembly (2) that is embedded in the current transformer body; and a primary conductor (3), the primary conductor (3) comprising a first end (31) and a second end (32), wherein one of the first end and second end serves as an input terminal of the current transformer, and the other serves as an output terminal of the current transformer, and wherein the first end is also constructed as a stationary contact of the current transformer. Since the terminal of the current transformer serves as a stationary contact, a separate stationary contact and a separate conductor connecting the current transformer and the stationary contact in the prior art are omitted, reducing the number of components and reducing costs. The current transformer also has an integrated temperature measuring device, which is able to more accurately measure the temperature of a movable contact that contacts the stationary contact and an electrical component where the movable contact is located, and is furthermore able to monitor the temperature of an external component, such as a copper busbar or a cable on a busbar side.

## Description

### Technical Field

The present invention relates to a technical field of current transformers, in particular to a current transformer for a switchgear (also known as a switch cabinet).

### Background Art

The magnitude of the current in lines for power generation, transformation, transmission, distribution and use varies widely, from a few amps to tens of thousands of amps. For ease of measurement, protection and control, conversion to a relatively uniform current is required. In addition, the voltage on the lines is generally high, and it is very dangerous if the voltage is measured directly. The current transformer realizes current transformation and electrical isolation functions, and is a conversion device that converts a primary side high current into a secondary side low current (e.g. a standard low current of 1 A or 5 A) according to the principle of electromagnetic induction. Current transformers also function to isolate high voltage, high current systems to ensure personal and equipment safety.

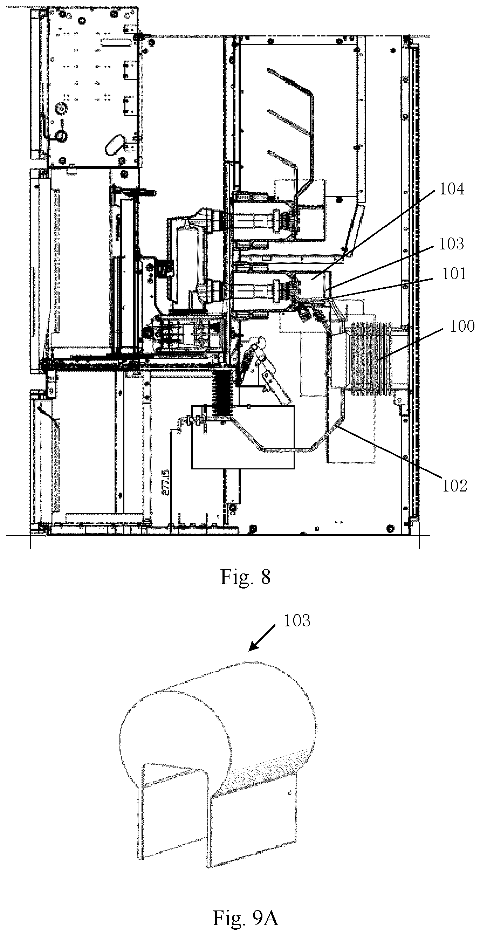

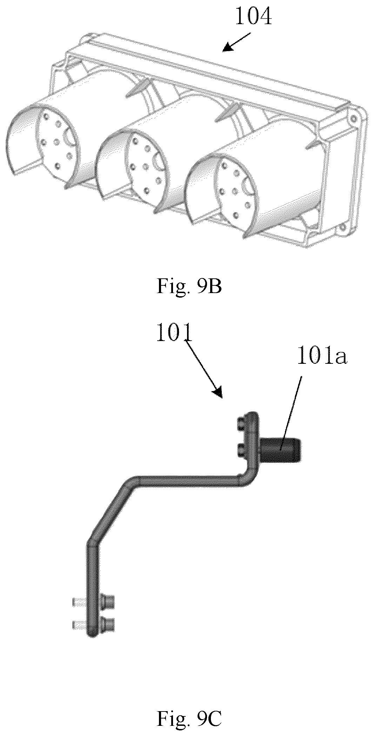

An existing current transformer is shown in Figs. 8 and 9A - 9C for example. The current transformer 100 shown is mounted in a switchgear that is partially shown. An upper conductive terminal of the current transformer 100 is connected to a stationary contact 101a by means of a first conductor 101 (which may be a copper busbar) (see Fig. 9C). The stationary contact 101a is electrically connected to a movable contact (not shown) of a circuit breaker at an operating position of the circuit breaker. A lower conductive terminal of the current transformer 100 is electrically connected to a second conductor 102, thereby realizing an electrical connection.

Such existing current transformers require a first conductor 101 on which a stationary contact 101a is provided in order to connect, for example, to a movable contact of a circuit breaker, and have many components and a complex structure, and a larger heavier contact housing 104 (see Fig. 9B) is needed to provide insulation protection for the stationary contact. Furthermore, since the high-voltage first conductor 101 is exposed, it is also necessary to provide it with a separate insulating isolation member 103 (see Fig. 9A).

In a high-current circuit, at various lap joint positions, i.e. contact points of electrical components, heat emission is serious. If the temperature of these key heat emission locations is not controlled, then it is easy for electrical components to be damaged and for safety hazards to emerge due to the accumulation of heat. However, existing current transformers only have functions that focus on measurement, protection, current standardization and/or safety isolation, etc., and do not have a temperature monitoring function.

### Summary of the Invention

The object of the present invention is to solve at least one of the abovementioned problems and/or other problems in the prior art.

To achieve the above object, according to one aspect of the present invention, a current transformer is provided, the current transformer comprising a current transformer body that is formed by casting; a current transforming assembly that is embedded in the body and comprises a primary winding and a secondary winding; and a primary conductor that supplies the primary winding with power, the primary conductor comprising a first end and a second end, wherein one of the first end and second end serves as an input terminal of the current transformer, and the other serves as an output terminal of the current transformer, and wherein the first end is also constructed as a stationary contact of the current transformer.

In this technical solution, by directly constructing the first end, which acts as an input terminal or an output terminal of the primary conductor of the current transformer, as a stationary contact of the current transformer, an additional stationary contact and an additional conductor connecting a terminal of a current transformer and the stationary contact in the prior art are omitted, minimizing the number of components, reducing costs, and causing a switchgear to be more compact in structure and occupy less volume, facilitating miniaturization. Also, the safety performance of the switchgear is enhanced, since an exposed additional conductor connecting the terminal of the current transformer and the stationary contact is no longer necessary. Moreover, the stationary contact is directly integrated with the primary conductor, without the need for a mounting or connecting member between the two, making the structure of the current transformer simpler, with better electrical performance.

According to an example of the present invention, the current transformer further comprises a temperature measuring device, the temperature measuring device comprising a first temperature measuring component that contacts the stationary contact. The first temperature measuring component directly contacts the stationary contact, and therefore can directly measure the temperature of the stationary contact and of the movable contact that the stationary contact contacts (since heat is conducted directly from the movable contact to the stationary contact), and therefore can more precisely measure the temperature of the electrical component where the movable contact is located. This is particularly advantageous when this stationary contact is connected to a movable contact of the circuit breaker, allowing the temperature of the circuit breaker to be monitored.

According to an example of the present invention, the temperature measuring device further comprises an electrical connection port that is exposed at an outer surface of the current transformer body, so that the temperature measuring device can obtain temperature of an component outside the current transformer. Thus, two temperature measuring points are provided on this current transformer; not only does this allow temperature monitoring of the interior of the current transformer and a connected circuit breaker in real time, but it also allows temperature monitoring of an external component, such as a busbar side component (e.g. a cable or a copper busbar).

According to an example of the present invention, the primary conductor comprises a tubular part, wherein the first end is a free end of the tubular part, and the first temperature measuring component is arranged on an inner wall of the free end of the tubular part. This facilitates the placement and positioning of the temperature measuring device and facilitates the casting process.

According to an example of the present invention, the primary conductor further comprises an extension part, one end of the extension part being connected to the tubular part, and the other end of the extension part forming the second end of the primary conductor, wherein the second end is constructed as a plate shape. The plate-shaped second end can be connected to an external conductor over a larger area and more easily, either as an input terminal or as an output terminal.

According to an example of the present invention, the temperature measuring device further comprises a conductor that is connected to the electrical connection port, the conductor extending along the tubular part and the extension part. Such a manner facilitates the positioning of the conductor during the casting of the current transformer body.

According to an example of the present invention, the current transforming assembly further comprises an additional secondary winding, wherein the additional secondary winding supplies the temperature measuring device with power. This structure allows an active temperature measuring device to be integrated in the current transformer.

According to an example of the present invention, the current transformer comprises a cylindrical part, which is integrally formed with the current transformer body and extends beyond the stationary contact. The cylindrical part is integrally formed with the current transformer body by means of casting an insulating material, and surrounds the stationary contact and insulates the stationary contact (which is also the connection position of the movable contact and the stationary contact); therefore, it is not necessary to use a separate insulating isolation member for the stationary contact, and the size of a contact housing can be reduced, and a separate contact housing may even be replaced. Therefore, materials and internal space of the switchgear are saved, facilitating the miniaturization of the switchgear, which also has better insulation performance.

According to an example of the present invention, the stationary contact is constructed to contact and electrically connect to a movable contact of a circuit breaker of a switchgear.

According to an example of the present invention, the current transformer further comprises a power-taking component, one end of which being electrically connected to the primary conductor, and the other end being adapted to electrically connect to an indication device that indicates an energized state or a de-energized state of the current transformer. "Electrically connect(ed)" herein may refer to direct contact and being electrically connected, or may refer to being electrically connected via one or more intermediate conducting components. With this technical solution, the power-taking component is integrated in the current transformer, so that an additional power-taking component in the switchgear can be avoided, and since the power-taking component is embedded in an insulating body of the current transformer, an insulating support member does not need to be additionally provided for the power-taking component, which overall reduces the number of electrical components and reduces the complexity of the switchgear.

According to another aspect of the present invention, a switchgear is further provided, comprising the current transformer according to the examples described above. According to an example, an electrical connection port of a temperature measuring device of the current transformer in this switchgear is electrically connected to a second temperature measuring component, and the second temperature measuring component is arranged on a cable or a copper busbar on a busbar side of the switchgear.

### Brief Description of the Drawings

A clear understanding of the features and advantages of the present invention will be gained from the detailed description provided below with reference to the drawings. It is to be understood that the following drawings are merely schematic and not necessarily drawn to scale, so must not be regarded as limiting the present invention. In the drawings:
Fig. 1 shows a perspective view of an exemplary current transformer according to the present invention.
Fig. 2 shows a perspective view of the current transformer in Fig. 1 viewed in another direction.
Fig. 3 shows a perspective sectional view of the current transformer shown in Fig. 1 along line A-A.
Fig. 4 shows a perspective view of some electrical components embedded in a body of the current transformer, wherein the cast current transformer body is not shown.
Fig. 5 shows another perspective view of some electrical components embedded in the body of the current transformer.
Fig. 6 shows a sectional schematic view of the electrical components shown in Fig. 5 along line B-B.
Fig. 7 shows a schematic view of a switchgear that is fitted with a current transformer of an exemplary embodiment of the present invention.
Fig. 8 shows a schematic view of an existing current transformer that is fitted in a switchgear.
Fig. 9A shows a perspective view of an insulating isolation member shown in Fig. 8.
Fig. 9B shows a perspective view of a contact housing shown in Fig. 8.
Fig. 9C shows a schematic view of a first conductor shown in Fig. 8.

### Detailed Description of the Invention

Specific embodiments of the invention are described below with reference to the accompanying drawings. In the following description, numerous specific details are set forth in order to enable those skilled in the art to more fully understand and implement the invention. It will be apparent to those skilled in the art, however, that the invention may be implemented without some of these specific details. In addition, it is to be understood that the invention is not limited to the particular embodiments described. Rather, the use of any combination of the features and elements described below may be contemplated for implementing the invention, whether or not they relate to different embodiments.

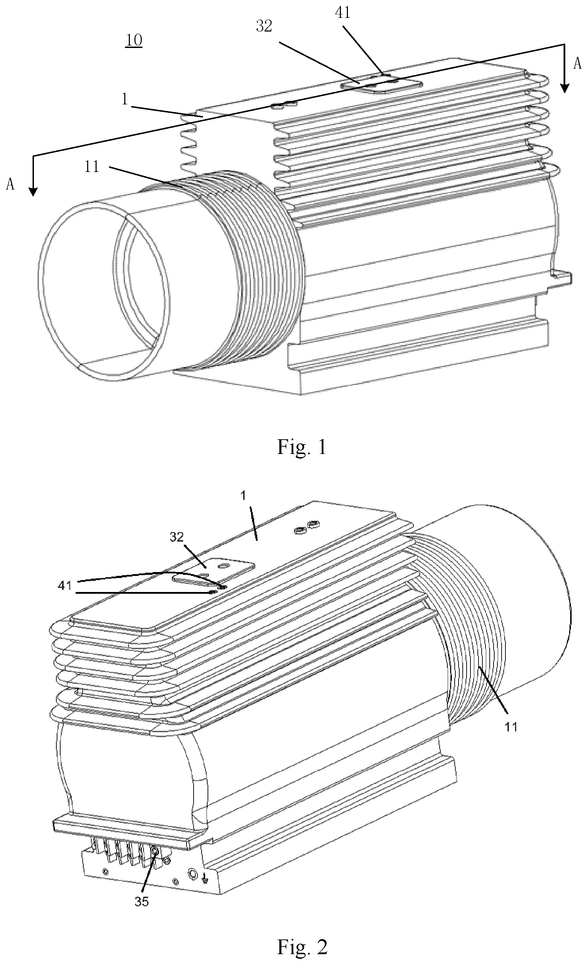

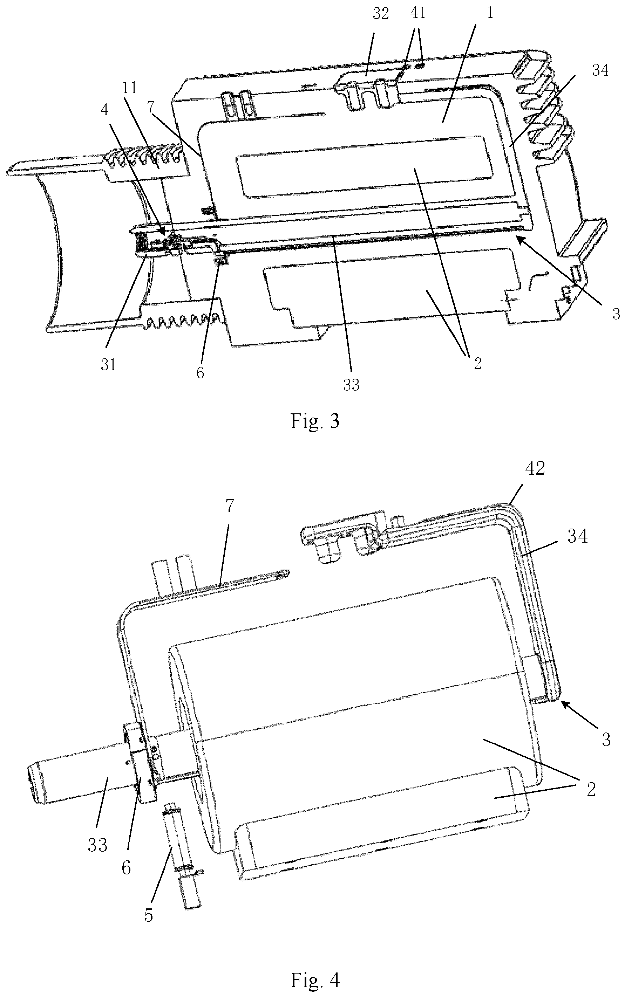

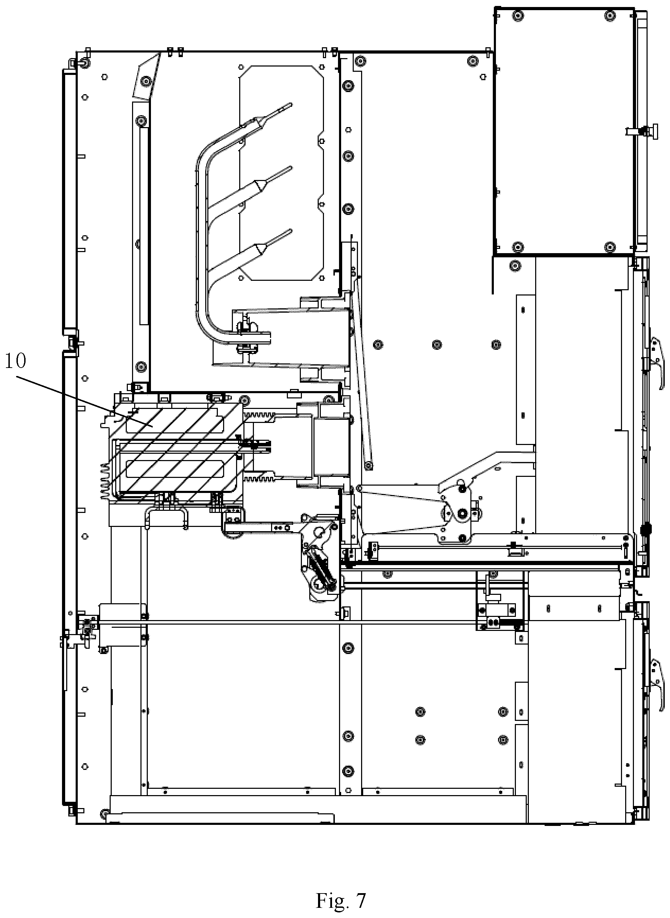

Fig. 7 shows a schematic view of a switchgear (also known as a switch cabinet) that is fitted with a current transformer 10 of an exemplary embodiment of the present invention. In Fig. 7, the current transformer 10 is shown schematically as a portion with section lines (a circuit breaker is not shown in the figure for simplicity). Figs. 1 and 2 show a perspective view of a current transformer 10 according to this embodiment. Fig. 3 shows a sectional perspective view along line A-A in Fig. 1. The current transformer body 1 may be formed by casting an insulating material, such as an epoxy resin, and electrical components, comprising a current transforming assembly 2, are embedded therein. The current transforming assembly 2 is schematically shown in Fig. 3 and Fig. 4 as blocks, and may in particular comprise a primary winding (also known as a first winding) and a secondary winding (also known as a second winding), and is used for transforming a high current on the primary side into a current on the secondary side (e.g. a current suitable for a measuring instrument). The current transforming assembly 2 as a prior art is not detailed unnecessarily herein. As shown in Fig. 3, a primary conductor 3 that supplies the primary winding of the current transforming assembly 2 with power comprises a first end 31 and a second end 32. In this embodiment of the present invention, one of the first end 31 or the second end 32 acts as an input terminal of the current transformer, and the other correspondingly acts as an output terminal of the current transformer, and also the first end 31 therein is constructed as a stationary contact of the current transformer. The transformed secondary side current is drawn out through a secondary output terminal 35 shown in Fig. 2.

In the technical solution of the present invention, by directly constructing the first end, which acts as an input terminal or an output terminal of the primary conductor 3, as a stationary contact of the current transformer, a separate stationary contact and a separate conductor connecting the current transformer and the stationary contact in the prior art (such as the first conductor 101 and the stationary contact 101a in Figs. 8 and 9C) are omitted, and this stationary contact is directly integrated as a whole with the primary conductor, minimizing the number of components, reducing costs and making assembly simpler, and causing a switchgear to be more compact in structure and occupy less volume, facilitating miniaturization.

As shown in Figs. 1-3, the current transformer comprises a cylindrical part 11, which is integrally formed with the current transformer body 1 and extends beyond the stationary contact (i.e. the first end of the primary conductor 3). The cylindrical part 11 is integrally formed with the current transformer body 1 by means of casting an insulating material, and surrounds the stationary contact and insulates the stationary contact (which is also the connection position of a movable contact and the stationary contact); therefore, it is not necessary to use a separate insulating isolation member (e.g. an insulating isolation member 103 in Fig. 8 and Fig. 9A), and the size of a contact housing can be reduced, and a separate contact housing (e.g., the contact housing 104 in Fig. 8 and Fig. 9B) may even be replaced.

The current transformer in this embodiment saves cost and space by reducing the use of conductors and insulating isolation members, and reducing the size of the contact housing or eliminating the need for the contact housing, facilitating miniaturization of the switchgear.

A temperature measuring device 4 is also provided for the current transformer in this embodiment. The temperature measuring device provided by the present invention is distinguished by comprising a first temperature measuring component that contacts the stationary contact. The temperature measuring component acts as a data collection and conversion unit, and is able to obtain temperature information of a measured component. In other words, the first temperature measuring component of the temperature measuring device directly contacts the stationary contact, and therefore can directly measure the temperature of the stationary contact and the movable contact that the stationary contact contacts (heat is conducted directly from the movable contact to the stationary contact), and therefore can more precisely measure the temperature of the electrical component where the movable contact is located. This is particularly advantageous when this stationary contact is connected to the movable contact of the circuit breaker, allowing the temperature of the circuit breaker to be monitored.

Furthermore, as shown in Figs. 2 - 4, the temperature measuring device 4 of the present embodiment further comprises an electrical connection port 41 that is exposed at an outer surface of the current transformer body, so that the temperature measuring device can obtain a measured temperature of an component outside the current transformer. The electrical connection port 41 can be electrically connected to a second temperature measuring component (not shown), which is capable of obtaining the temperature of the component outside the current transformer, such as a copper busbar or a cable on a busbar side of a switchgear, at lap joint positions, where temperatures tend to be excessively high. The electrical connection port 41 can be connected via a conducor 42 to a data receiving and transmitting unit (e.g. a chip) of the temperature measuring device 4. The data receiving and transmitting unit may receive temperature information obtained by the first and second temperature measuring components and can transmit the information (preferably wirelessly) to the outside.

In the current transformer of this embodiment, two temperature monitoring points are provided, and the temperature of the monitoring points can be obtained in real time. Not only does this allow temperature monitoring of the interior of the current transformer and a connected circuit breaker, but it also allows temperature monitoring of an external component, such as a busbar side component. Moreover, through the contact between the first temperature measuring component and the stationary contact, a component where a movable contact is located is measured more precisely.

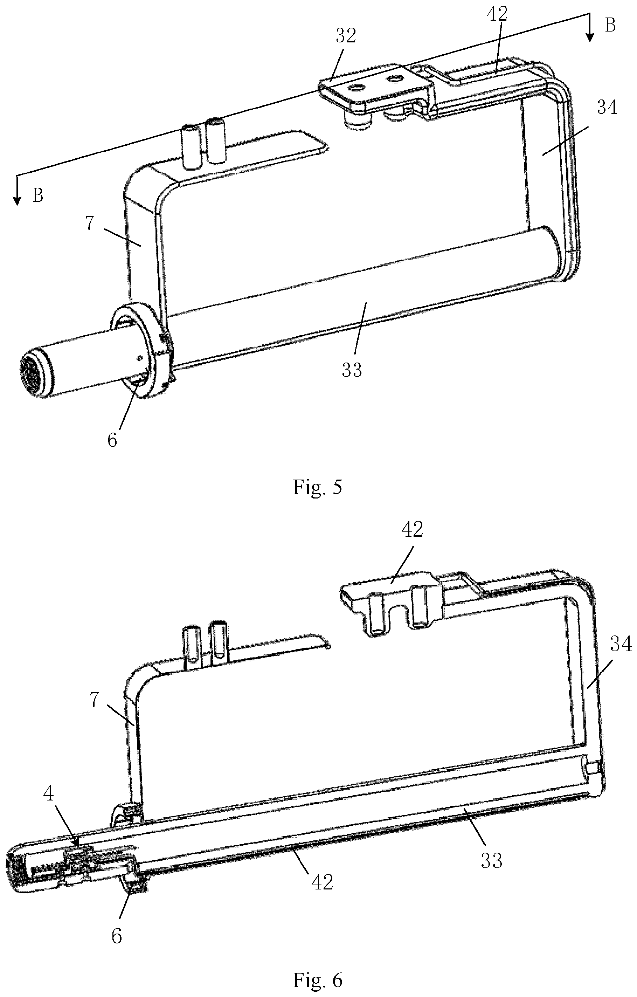

As shown in Figs. 3 and 5-6, the primary conductor 3 may comprise a tubular part 33 (such as a copper tube); at least the first temperature measuring component of the temperature measuring device 4 is arranged on an inner wall of a free end (i.e. the first end 31) of the tubular part, and preferably, the entire temperature measuring device 4 can be arranged in the inner wall of the free end of the tubular part. This facilitates the placement and positioning of the temperature measuring device 4. The primary conductor 3 further comprises an extension part 34 (such as a copper busbar), one end of the extension part 34 being connected to the tubular part 33, and the other end forming the second end 32 of the primary conductor, wherein the second end is constructed as a plate shape (as can be clearly seen in Figs. 2 and 5). The plate-shaped second end can be connected to an external conductor over a larger area, either as an input terminal or as an output terminal. As can be seen from Figs. 3, 5 and 6, a conductor 42 extends along the tubular part 33 and the extension part 34 to the data receiving and transmitting unit of the temperature measuring device 4, and such a manner facilitates the positioning of the conductor 42 during the casting of the current transformer body 1.

In the present embodiment, an additional secondary winding 6 is also provided which supplies the temperature measuring device 4 with power as a power supply winding. Specifically, the winding takes power by means of electromagnetic induction and supplies the transformed current to the data receiving and transmitting unit of the temperature measuring device 4. As shown in Figs. 5 and 6, the additional secondary winding 6 may be arranged on an outer wall of the tubular part 33 at a position adjacent to the temperature measuring device 4.

In the prior art, in order to indicate an energized or de-energized state of an entire switchgear, a separate power-taking component is usually provided, which can provide a capacitance value and is electrically connected to an indication deviceof an instrument panel. However, in the embodiment of the present invention, a power-taking component 5 is integrated in the current transformer (which can be seen in Fig. 4). One end of the power-taking component 5 (e.g. a capacitor) is electrically connected to the primary conductor 3, and the other end is adapted to electrically connect to an indication device, such as an indicating lamp, that indicates an energized state or a de-energized state of the current transformer. Therefore, with this techinial solution, the power-taking component 5 is integrated in the current transformer, so that an additional power-taking component can be avoided. And, since the power-taking component 5 is embedded in the insulating body of the current transformer, an insulating support member does not need to be additionally provided for the power-taking component, which overall reduces the number of electrical components and reduces the complexity of the switchgear. In the current transformer body 1, one or more shielding members may also be provided as required, such as the shielding member 7 shown in Figs. 3-6.

The present invention also provides a switchgear (not shown) that comprises the current transformer. The primary conductor of the current transformer is connected, by means of a stationary contact at the first end of the primary conductor, for example, to a circuit breaker of the switchgear. The second end of the primary conductor is connected to, for example, a cable side or a copper busbar side of a feeder end. Due to the use of the current transformer, the switchgear requires fewer electrical components, and has fewer internal space requirements and lower manufacturing costs, and is capable of monitoring the temperature of a site of interest in real time and accurately, so as to be able to warn against overheating, and it is also no longer necessary to additionally provide an indication component indicating the energized state of the switchgear.

Various modifications and changes can be made to the embodiments disclosed above by those skilled in the art without departing from the scope or spirit of the present invention. Based on the implementation of the present invention as disclosed herein, other embodiments of the present invention will be obvious to those skilled in the art. This description and the examples disclosed therein should be regarded as merely exemplary, the true scope of the present invention being specified by the attached claims and their equivalents.

## Claims

1. A current transformer, **characterized in that**: the current transformer comprises:
a current transformer body (1) that is formed by casting;
a current transforming assembly (2) embedded in the body (1) and comprising a primary winding and a secondary winding; and
a primary conductor (3) that supplies the primary winding with power, the primary conductor (3) comprising a first end (31) and a second end (32), wherein one of the first end (31) and second end (32) serves as an input terminal of the current transformer, and the other serves as an output terminal of the current transformer, and wherein the first end (31) is also constructed as a stationary contact of the current transformer.

2. The current transformer according to claim 1, **characterized in that** the current transformer further comprises a temperature measuring device (4) which comprises a first temperature measuring component that contacts the stationary contact.

3. The current transformer according to claim 2, **characterized in that** the temperature measuring device (4) further comprises an electrical connection port (41) that is exposed at an outer surface of the current transformer body, so that the temperature measuring device can obtain temperature of an component outside the current transformer.

4. The current transformer according to any one of the claims claim 2 to 3, **characterized in that** the primary conductor (3) comprises a tubular part (33), wherein the first end (31) is a free end of the tubular part (33), and the first temperature measuring component is arranged on an inner wall of the free end of the tubular part (33).

5. The current transformer according to claim 4, **characterized in that** the primary conductor (3) further comprises an extension part (34), one end of the extension part (34) being connected to the tubular part (33), and the other end forming the second end (32) of the primary conductor, wherein the second end is constructed as a plate shape.

6. The current transformer according to claim 5, **characterized in that** the temperature measuring device further comprises a conductor connected to the electrical connection port (41) and extending along the tubular part (33) and the extension part (34).

7. The current transformer according to any one of the claims 2 to 6, **characterized in that** the current transforming assembly further comprises an additional secondary winding (6) which supplies the temperature measuring device with power.

8. The current transformer according to any one of the claims 1 to 7, **characterized in that** the current transformer comprises a cylindrical part (11), which is integrally formed with the current transformer body (1) and extends beyond the stationary contact.

9. The current transformer according to any one of the claims 1 to 8, **characterized in that** the stationary contact is constructed to contact and electrically connect to a movable contact of a circuit breaker of a switchgear.

10. The current transformer according to any one of the claims 1 to 9, **characterized in that** the current transformer further comprises a power-taking component (5), one end of which being electrically connected to the primary conductor (3), and the other end being adapted to electrically connect to an indication device that indicates an energized state or a de-energized state of the current transformer.

11. A switchgear, **characterized by** comprising the current transformer according to any one of the claims 1-10.

12. The switchgear according to Claim 11, **characterized in that** an electrical connection port (41) of a temperature measuring device of the current transformer is electrically connected to a second temperature measuring component, and the second temperature measuring component is arranged on a cable or a copper busbar on a busbar side of the switchgear.
